(19)

Europäisches
Patentamt
European
Patent Office
Office européen
des brevets

(11) **EP 2 784 568 A1**

(12) **EUROPEAN PATENT APPLICATION**

(43) Date of publication:
**01.10.2014 Bulletin 2014/40**

(21) Application number: **14161307.5**

(22) Date of filing: **24.03.2014**

(51) Int Cl.:
*G02B 26/08* (2006.01)   *G02B 27/01* (2006.01)
*G02B 27/18* (2006.01)   *G01L 9/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.03.2013 JP 2013072743**

(71) Applicant: **Funai Electric Co., Ltd.**
**Daito-shi,**
**Osaka 574-0013 (JP)**

(72) Inventors:
• **Hashimoto, Masahiro**
  **Osaka, 574-0013 (JP)**
• **Hirano, Atsuya**
  **Osaka, 574-0013 (JP)**

(74) Representative: **Vigand, Philippe et al**
**Novagraaf International SA**
**3 chemin de l'Echo**
**1213 Onex Geneva (CH)**

(54) **Projector and head-up display device taking into account the atmospheric pressure**

(57)     A projector 10 includes: a laser light generating unit 11 that emits laser light including image information; a laser light scanning unit 12 that scans the laser light emitted by the laser light generating unit 11 at a predetermined scan angle to project an image on a transparent display plate 20; and a scan control unit 134 that sets a scan driving voltage, which determines the scan angle, according to an atmospheric pressure of an area in which the laser light scanning unit 12 is disposed and supplies the scan driving voltage to the laser light scanning unit 12 to control fluctuations in the scan angle.

FIG. 2

EP 2 784 568 A1

**Description**

**Field**

The present invention relates to projectors and head-up display (hereinafter also referred to as HUD) devices for projecting images

**Background**

In recent years, image display devices which project images on a screen using a micro electromechanical systems (MEMS) resonant mirror that scans a visible laser light source have been proposed.

Patent literature (PTL) 1 discloses an image display device that estimates changes in temperature of a MEMS reflecting mirror from the duration of light emission by the light source, and increases brightness by correcting the horizontal and vertical diving control of a MEMS reflecting mirror based on the estimated temperature. With this, it is possible to prevent adverse influence on the driving conditions of the MEMS reflecting mirror, even when the energy output from light sources is increased to increase the brightness of the projected image.

**Citation List**

**Patent Literature**

[PTL 1] Japanese Unexamined Patent Application Publication No. 2013-41289.

**Summary**

**Technical Problem**

However, due to the fact that the image display device disclosed in PTL 1 is often installed in a moving object such as an automobile, the driving state of the MEMS reflecting mirror not only changes with the temperature indicating the internal state of the MEMS reflecting mirror, but also with the installation environment of the image display device. As such, when the current temperature of the MEMS reflecting mirror is estimated from only the above-described driving state without taking into account the installation environment, it is difficult to obtain accurate temperature information. When the horizontal and vertical diving control of the MEMS reflecting mirror are corrected based on temperature estimated in this manner, a problem arises in which the deflection angle of the MEMS reflecting mirror becomes unstable, causing the drawing region on the screen to vary and the image to deform, resulting in a degraded image quality.

The present invention has been conceived in view of this problem and aims to provide a projector and a head-up display device capable of preserving the high quality of a projected image even when the installation environment changes.

**Solution to Problem**

In order to achieve the above-described goal, the projector according to an aspect of the present invention includes: a laser light generating unit configured to emit laser light including image information; a laser light scanning unit configured to scan the laser light emitted by the laser light generating unit at a predetermined scan angle to project an image on a projection screen; and a control unit configured to set a scan driving voltage according to an atmospheric pressure of an area in which the laser light scanning unit is disposed and supply the scan driving voltage to the laser light scanning unit to control fluctuations in the scan angle, the scan driving voltage determining the scan angle.

With this, the control unit sets the scan driving voltage based on the atmospheric pressure of the laser light scanning unit in order to control fluctuations in the laser light scan angle, making it possible to control fluctuations in the drawing region caused by the external atmospheric pressure. This in turn makes it possible keep the visual appearance of the projected image as seen by the user constant and increase the quality of the projected image.

For example, in the projector according to an aspect of the present invention, the laser light scanning unit may include a first mirror that reflects the laser light and swings to a predetermined deflection angle about an axis passing through a surface that reflects the laser light to scan the laser light at the predetermined scan angle.

With this, since the laser light is scanned by mechanical oscillation of the first mirror, it is possible to control the scan angle of the laser light by controlling the mechanical deflection angle of the first mirror.

For example, in the projector according to an aspect of the present invention, the deflection angle of the first mirror may increase with the scan driving voltage and decrease with an increase in the atmospheric pressure, and based on measured atmospheric pressure information for the laser light scanning unit, the control unit may be configured to set the scan driving voltage higher for higher values of the atmospheric pressure to control fluctuations in the scan angle.

This makes it possible to simplify the control of the laser light scan angle since the control unit sets the scan driving voltage higher for higher values of the atmospheric pressure.

For example, in the projector according to an aspect of the present invention, the first mirror may be disposed in an airtight container, and based on a temperature in the airtight container measured as the atmospheric pressure information, the control unit may be configured to set the scan driving voltage higher for higher values of the temperature to control fluctuations in the scan angle.

With this, it is possible to control variations in the drawing region of the projected image caused by the external atmospheric pressure and keep the visual appearance of the projected image as seen by the user constant. Moreover, since it is possible to use a frequently used sensor such as a thermistor for the temperature sensor, the configuration of the laser light scanning unit can be simplified in comparison to when the atmospheric pressure sensor is used.

For example, in the projector according to an aspect of the present invention, the first mirror may horizontally scan the laser light at a resonance frequency of the first mirror, the laser light scanning unit may further include a second mirror that vertically scans the laser light at a frequency lower than the resonance frequency of the first mirror, and the control unit may be configured to set the scan driving voltage according to the atmospheric pressure, the scan driving voltage determining the deflection angle of the first mirror.

With this, the second mirror is driven in a vertical direction at a quasi-static speed that is slower than when the first mirror is driven horizontally. As such, the second mirror is affected less by air resistance than the first mirror. Thus, the control unit only needs to control the deflection angle of the first mirror, thereby simplifying the control of the laser light scan angle.

For example, in the projector according to an aspect of the present invention, the control unit may be configured to divide, into a plurality of voltage steps, a fluctuation amount of the scan driving voltage set relative to fluctuations in the atmospheric pressure, and incrementally change the scan driving voltage using the plurality of voltage steps.

Moreover, in the projector according to an aspect of the present invention, the control unit may be configured to change the scan driving voltage over a period spanning one or more frames relative to fluctuations in the atmospheric pressure.

When the fluctuation amount of the scan driving voltage is great and the drawing region distorts rapidly, this causes a feeling of discomfort for the user. However, with this, when the scan driving voltage is changed incrementally or over a period spanning one or more frames, it is possible to minimize discomfort felt by the user.

For example, in the projector according to an aspect of the present invention, the control unit may be configured to divide a predetermined atmospheric pressure range into a plurality of atmospheric pressure zones, and set the scan driving voltage to be identical for atmospheric pressures belonging to a same one of the atmospheric pressure zones.

This makes it possible to reduce the amount of fitting data, such as a lookup table (LUT), stored in memory, and simplify the configuration of the control unit.

It should be noted that the present invention can not only be achieved as a projector including the control unit having the above described characteristics, but also as a head-up display device including such a projector.

Moreover, the present invention can not only be achieved as a projector including the control unit having the above described characteristics, but also as a method of controlling the projector in which processes performed by the control unit having the above described characteristics included in the projector are implemented as steps.

## Advantageous Effects

With the projector according to an aspect of the present invention, it is possible to control variations in the drawing region caused by external atmospheric pressure and increase the quality of a projected image.

## Brief Description of Drawings

[FIG. 1A] FIG. 1A is an example of how the HUD device according to the embodiment is installed.
[FIG. 1B] FIG. 1B illustrates an example of the display when the HUD device according to the embodiment is used in a car navigation system.
[FIG. 2] FIG. 2 is a block diagram illustrating the projector and the HUD device according to the embodiment.
[FIG. 3] FIG. 3 illustrates an image being drawn by the laser light scanning unit on the screen.
[FIG. 4] FIG. 4 illustrates the relationship between a ray incident on the MEMS mirror and a ray reflected by the MEMS mirror.
[FIG. 5] FIG. 5 illustrates the relationship between the angle of rotation of the MEMS mirror and the scan angle of the laser light.

[FIG. 6] FIG. 6 is a graph illustrating the relationship between the deflection angle and the scan driving voltage of the MEMS mirror, relative to the external atmospheric pressure.

[FIG. 7] FIG. 7 is a graph illustrating the setting of the scan driving voltage according to variation 2 of the embodiment.

**Description of Embodiments**

Hereinafter, an exemplary embodiment is described in greater detail with reference to the accompanying Drawings. It should be noted that the exemplary embodiment described below shows a specific example of the present invention. The numerical values, shapes, materials, structural elements, the arrangement and connection of the structural elements, steps, the processing order of the steps etc. shown in the following exemplary embodiment are mere examples, and therefore do not limit the present invention, which is limited by the appended Claims. Therefore, among the structural elements in the following exemplary embodiment, structural elements not recited in any one of the independent claims are described as preferred structural elements, and are not absolutely necessary to overcome the problem according to the present invention.

**Embodiment**

(HUD Device Configuration)

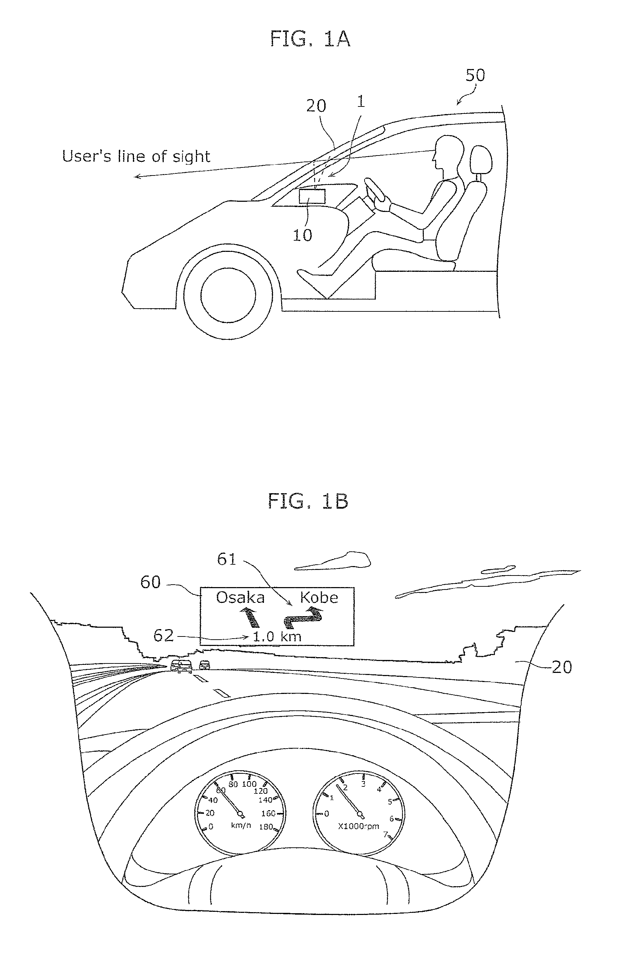

FIG. 1A is an example of how the HUD device according to the embodiment is installed. The HUD device 1 shown in FIG. 1A is installed (mounted) in a transport vehicle, such as an automobile 50, for example. The HUD device 1 includes a projector 10 that projects an image including information and a transparent display plate 20 (windshield) arranged down the user's light of sight. The projector 10 is installed in the dashboard of the automobile 50, for example. The image projected from the projector 10 is reflected back toward the driver by a combiner provided in the transparent display plate 20 (windshield) in the automobile 50.

FIG. 1B illustrates an example of the display when the HUD device according to the embodiment is used in a car navigation system. In FIG. 1B, navigation information (such as the route to a designation) is displayed on the transparent display plate 20. More specifically, information 61 and information 62 which indicate that routes to Osaka and Kobe will split 1.0 km ahead are displayed. Moreover, the information 61 and the information 62 are displayed on a display region 60 of the transparent display plate 20. This information is displayed at a position on the transparent display plate 20 that corresponds to the user's (the driver's) line of sight. The HUD device 1 is attached to the automobile 50 when the automobile 50 is produced.

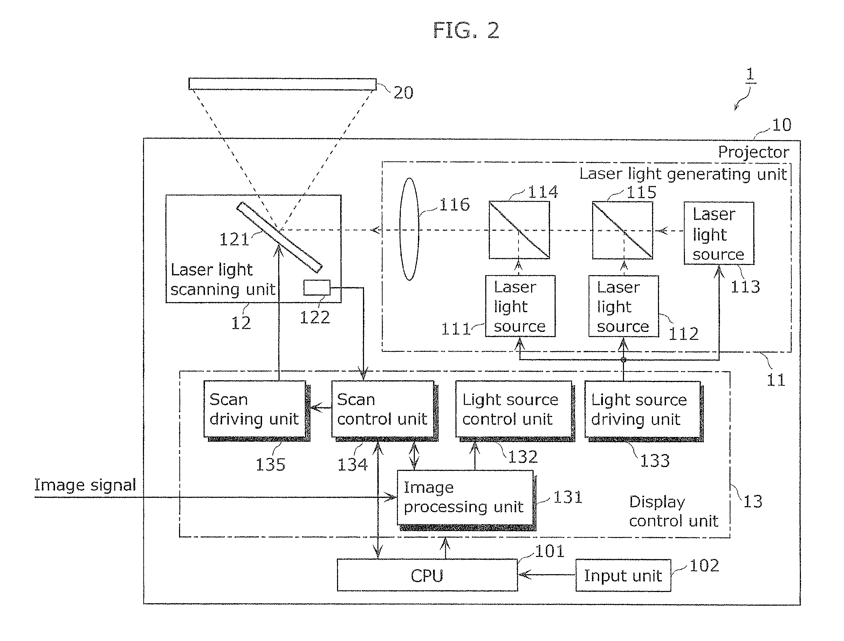

FIG. 2 is a block diagram illustrating the projector and the HUD device according to the embodiment. As FIG. 2 illustrates, the HUD device 1 includes the projector device 10 and the transparent display plate 20. The projector 10 includes a laser light generating unit 11, a laser light scanning unit 12, a display control unit 13 that controls the laser light generating unit 11 and the laser light scanning unit 12, a CPU 101, and an input unit 102. By operating the above-described constituent components, the projector 10 causes the laser light generating unit 11 to generate laser light including an image signal, and scans the laser light with the laser light scanning unit 12 to project and image on the transparent display plate 20.

(Projector Configuration)

Hereinafter, the function of each constituent component included in the projector 10 will be described in detail.

The CPU 101 is a processor that instructs the projector 10 and the display control unit 13. Additionally, the CPU 101 includes memory for storing data for, for example, controlling the scanning state of the laser light scanning unit 12.

The input unit 102 receives inputs such as those for turning on the HUD device 1 (the projector device 10), changing the projection angle of the image information, and changing the resolution of the projected image.

The display control unit 13 includes an image processing unit 131, a light source control unit 132, a light source driving unit 133, a scan control unit 134, and a scan driving unit 135. The display control unit 13 controls the laser light generating unit 11 and the laser light scanning unit 12 based on the instructions from the CPU 101.

The image processing unit 131 is configured to control the projection of the image information based on an image signal input from an external source. More specifically, the image processing unit 131 controls the driving of the MEMS mirror 121 via the scan control unit 134 and the scan driving unit 135 based on an image signal input from an external source. Moreover, the image processing unit 131 is configured to control the emission of laser light from the laser light sources 111 through 113, via the light source control unit 132 and the light source driving unit 133, in synchronization with the driving control of the MEMS mirror 121.

The light source control unit 132 determines the output timing and the output power for each laser light output by the laser light sources 111 through 113 based on image information from the image processing unit 131, and causes the light source driving unit 133 to output light source driving signals to the laser light sources 111 through 113.

Based on image information from the image processing unit 131 and atmospheric pressure information on the MEMS mirror 121, the scan control unit 134 causes the scan driving unit 135 to output a scan driving signal that determines the deflection angle of the MEMS mirror 121 to the laser light scanning unit 12.

The laser light generating unit 11 is configured of three laser light sources 111, 112, and 113, beam splitters 114 and 115, and a lens 116. The laser light generating unit 11 generates laser light including image information for generating an image on the transparent display plate 20. The laser light source 111 emits blue laser light toward the beam splitter 114 based on the light source driving signal. The emitted blue laser light is reflected by the beam splitter 114, passes through the lens 116, and is projected on the MEMS mirror 121. The laser light source 112 emits green laser light toward the beam splitter 115 based on the light source driving signal. The emitted green laser light is reflected by the beam splitter 115, passes through the beam splitter 114 and the lens 116, and is projected on the MEMS mirror 121. The laser light source 113 emits red laser light toward the beam splitter 115 based on the light source driving signal. The emitted red laser light passes through the beam splitter 115, the beam splitter 114, and the lens 116, and is projected on the MEMS mirror 121.

The laser light scanning unit 12 includes the MEMS mirror 121 and an atmospheric pressure sensor 122. The laser light scanning unit 12 projects an image on the transparent display plate 20, which is the projection screen, by scanning the laser light emitted by the laser light generating unit 11 at a predetermined scan angle.

(MEMS Mirror Configuration)

Next, the configuration of the MEMS mirror 121 will be described in detail.

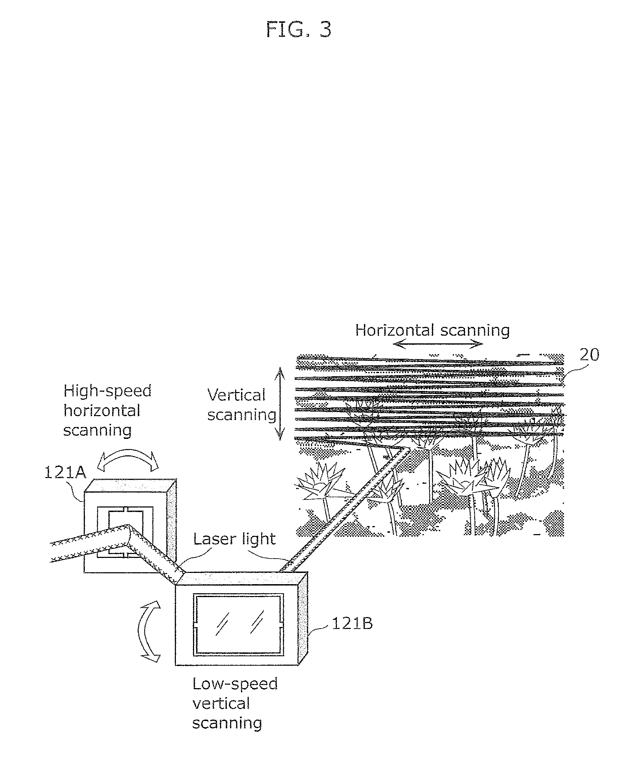

FIG. 3 illustrates an image being drawn by the laser light scanning unit on the screen. As is illustrated in FIG. 3, the laser light scanning unit 12 includes two MEMS mirrors 121A and 121B.

The MEMS mirror 121A is a first mirror that reflects the laser light and swings to a predetermined deflection angle about an axis passing through a surface off which the laser light reflects to scan the laser light at the predetermined scan angle. The MEMS mirror 121A is driven in a horizontal direction at the resonance frequency of the MEMS mirror 121A by the scan driving voltage supplied from the scan control unit 134 and the scan driving unit 135. With this, the MEMS mirror 121A reflects the laser light incident thereon to horizontally scan the laser light on the transparent display plate 20 at high speed.

On the other hand, the MEMS mirror 121B is a second mirror that is driven in a vertical direction at a quasi-static frequency that is lower than the resonance frequency of the MEMS mirror 121A. With this, the MEMS mirror 121B reflects the laser light incident thereon to vertically scan the laser light on the transparent display plate 20 at low speed. With this, the MEMS mirror 121B is much less affected by air resistance than the MEMS mirror 121A. As such, the scan driving voltage supplied to the MEMS mirror 121B does not need to be adjusted for variations in atmospheric pressure. In this case, the scan control unit 134 only needs to control the deflection angle of the MEMS mirror 121A, simplifying the control of the laser light scan angle. The embodiment exemplifies the case in which only the deflection angle of the MEMS mirror 121A is controlled. It should be noted that a configuration in which the deflection angles for both the MEMS mirror 121A and the MEMS mirror 121B are controlled is also included in the present invention. Next, the relationship between the deflection angle of the MEMS mirror and the scan angle of the laser light will be described.

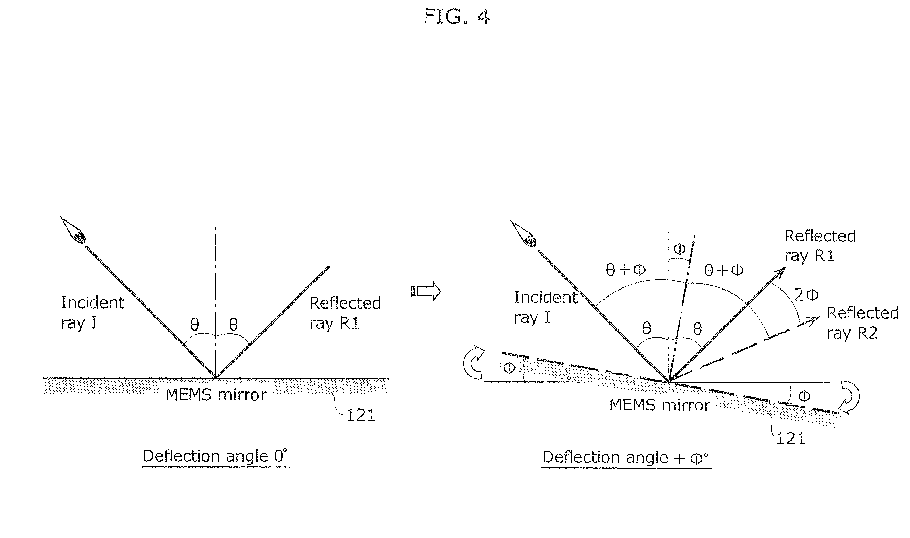

FIG. 4 illustrates the relationship between a ray incident on the MEMS mirror and a ray reflected by the MEMS mirror. First, as the drawing on the left in FIG. 4 illustrates, in the case of coplanar specular reflection of the incident ray I and the reflected ray R1, regardless of the degree of the angle of incidence, the angle of incidence and the angle of reflection are always equal (law of reflection). Next, when the MEMS mirror 121 is tilted $\Phi°$ (clockwise), the angle of incidence of the incident ray I is $(\theta + \Phi)°$ with respect to the surface normal, and according to the law of reflection, the angle of reflection of the reflected ray R2 is $(\theta + \Phi)°$ with respect to the surface normal. As a result, the reflected ray R2 inclines $2\Phi°$ (clockwise) with respect to the reflected ray R1.

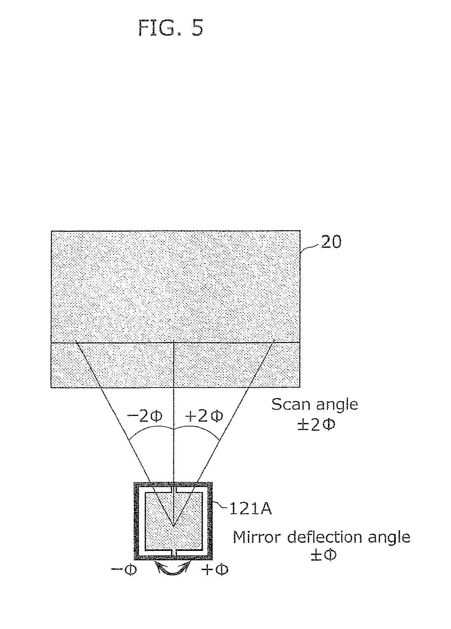

FIG. 5 illustrates the relationship between the deflection angle of the MEMS mirror and the scan angle of the laser light. As is illustrated in FIG. 5, the scan angle of the laser light is $2\Phi°$ with respect to a MEMS mirror 121 deflection angle of $\Phi°$. In other words, due to this relationship between the deflection angle of the MEMS mirror 121 and the scan angle of the laser light, the scan control unit 134 sets the scan driving voltage, which determines the scan angle, according to the atmospheric pressure of the laser light scanning unit 12, and supplies the set scan driving voltage to the laser light scanning unit 12 in order to control fluctuations in the scan angle of the laser light.

(MEMS Mirror Characteristics)

Next, characteristics of the MEMS mirror will be described. The air resistance of the MEMS mirror changes with changes in the external atmospheric pressure or atmospheric temperature of the MEMS mirror. The inventors discovered that, particularly when the MEMS mirror 121A is driven at high speed at the resonance frequency thereof, changes in external atmospheric pressure greatly influence air resistance, whereby the deflection angle of the MEMS mirror 121A fluctuates. In this case, when the scan driving voltage is constant, there are instances where the scan angle of the laser light fluctuates causing the drawing region to expand and contract.

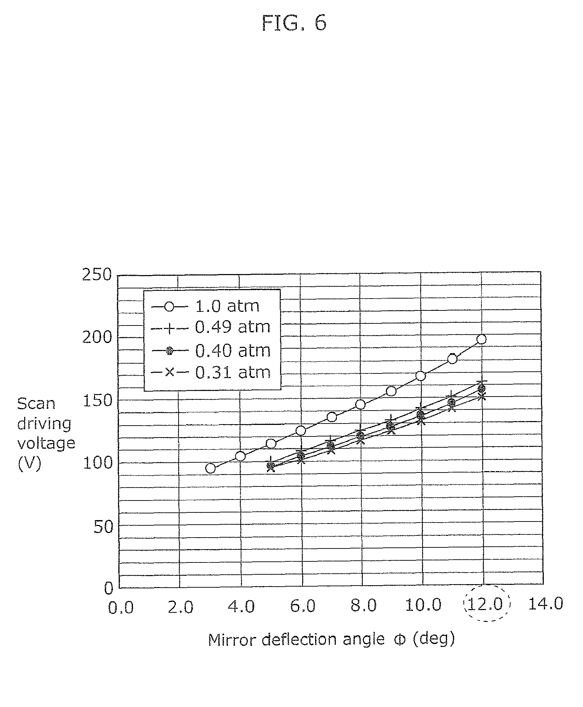

FIG. 6 is a graph illustrating the relationship between the deflection angle and the scan driving voltage of the MEMS mirror, relative to the external atmospheric pressure. In FIG. 6, the deflection angle of the MEMS mirror 121A is represented on the horizontal axis and the scan driving voltage output from the scan driving unit 135 to the laser light scanning unit 12 is represented on the vertical axis. This graph illustrates characteristics indicating the relationship between the deflection angle and the scan driving voltage when the MEMS mirror 121A is subjected to four different external atmospheric pressures. Here, the scan driving voltage is a scan driving signal that determines the deflection angle of the MEMS mirror 121A.

In the graph illustrated in FIG. 6, the deflection angle increases with the scan driving voltage. Moreover, the deflection angle increases with a decrease in the external atmospheric pressure of the MEMS mirror 121A. Consequently, the scan driving voltage is decreased in order to maintain the deflection angle. For example, when the deflection angle Φ of the MEMS mirror 121A is 12°, the scan driving voltage is approximately 192 V at an external atmospheric pressure of 1.00 atm, whereas the scan driving voltage is approximately 151 V at an external atmospheric pressure of 0.31 atm. This is because air thins and the frictional force between the air and the MEMS mirror decreases as external atmospheric pressure decreases.

(Control of MEMS Mirror Deflection Angle)

According to the above-described MEMS mirror characteristics, the deflection angle of the MEMS mirror 121A fluctuates with fluctuations in the atmospheric pressure, even if the scan driving voltage is held at a constant value. As a result, the horizontal scan angle of the laser light fluctuates causing the drawing region on the transparent display plate 20 to fluctuate.

The projector 10 according to the embodiment resolves the fluctuations of the drawing region on the transparent display plate 20. The scan control unit 134 sets the scan driving voltage to be applied to the MEMS mirror 121 according to the atmospheric pressure of the MEMS mirror 121 in order to control fluctuations in the scan angle of the laser light. This makes it possible to keep the drawing region constant. Next, the configuration of the projector 10 for controlling the scan driving voltage applied to the MEMS mirror 121A will be described.

The laser light scanning unit 12 is equipped with the atmospheric pressure sensor 122. The scan control unit 134 is electrically connected to the atmospheric pressure sensor 122 via a wireless or wired connection in order to obtain atmospheric pressure data measured by the atmospheric pressure sensor 122.

A lookup table (LUT), such as the one illustrated in FIG. 6, for example, defining the relationship between the deflection angle of the MEMS mirror 121A, the scan driving voltage, and the atmospheric pressure of the region in which the laser light scanning unit 12 is installed is stored in advance in the memory in the CPU 101. This LUT includes, for example, second-order approximation equations calculated from sampling data indicating the relationship between the mirror deflection angle and the scan driving voltage illustrated in FIG. 6.

$$\text{atmospheric pressure} = 0.31 \text{ atm} : y = 0.224x^2 + 4.185x + 68.3 \text{ (Equation 1)}$$

$$\text{atmospheric pressure} = 0.40 \text{ atm} : y = 0.254x^2 + 4.201x + 69.1 \text{ (Equation 2)}$$

$$\text{atmospheric pressure} = 0.49 \text{ atm} : y = 0.268x^2 + 4.400x + 71.2 \text{ (Equation 3)}$$

$$\text{atmospheric pressure} = 1.00 \text{ atm} : y = 0.288x^2 + 6.714x + 72.9 \text{ (Equation 4)}$$

Here, the variable y is the scan driving voltage and the variable x is the deflection angle of the MEMS mirror 121A used to achieve a predetermined scan angle.

The scan control unit 134 selects one of the four above LUT Equations based on the atmospheric pressure data measured by the atmospheric pressure sensor 122 and substitutes in the deflection angle x of the MEMS mirror 121A, which is determined from the scan angle of the laser light, to calculate the scan driving voltage y. The scan control unit 134 then outputs the calculated scan driving voltage y to the laser light scanning unit 12 via the scan driving unit 135. In other words, the scan control unit 134 measures the atmospheric pressure of the laser light scanning unit 12 and sets the scan driving voltage, which determines the scan angle, according to the measured atmospheric pressure in order to control fluctuations in the scan angle of the laser light, and causes the scan driving unit 135 to output the set scan driving voltage to the laser light scanning unit 12. More specifically, based on (i) the characteristics of the MEMS mirror 121A that the deflection angle of the mirror increases with the scan driving voltage and decreases with an increase in the atmospheric pressure of the laser light scanning unit 12 and (ii) the measured atmospheric pressure information on the laser light scanning unit 12, the scan control unit 134 sets the scan driving voltage higher for higher values of the atmospheric pressure in order to control fluctuations in the scan angle. With this, it is possible to control variations in the drawing region of the projected image occurring from the external atmospheric pressure and keep the visual appearance of the projected image as seen by the user constant. This therefore makes it possible to increase the quality of the projected image.

It should be noted that the approximation Equations 1 through 4 in the LUT stored in the memory are not limited to these four types.

Moreover, for example, when the difference between the scan driving voltage which is measured data (sampling data) shown in FIG. 6 and the scan driving voltage calculated from an approximation equation exceeds a predetermined margin of error, a different approximation equation may be used. This makes it possible to reduce the number of approximation equations in the LUT.

Moreover, the scan control unit 134 may divide, into a plurality of voltage steps, a fluctuation amount of the scan driving voltage set based on the atmospheric pressure data from the atmospheric pressure sensor 122, and incrementally change the scan driving voltage using the plurality of voltage steps.

Moreover, it is preferable that the scan control unit 134 change the scan driving voltage over a period spanning one or more frames, relative to fluctuations in the atmospheric pressure of the laser light scanning unit 12.

When the fluctuation amount of the scan driving voltage is great and the fluctuation amount is changed in steps, the drawing region distorts rapidly, causing a feeling of discomfort for the user. As such, when the scan driving voltage is gradually changed (incrementally or over a period spanning one or more frames) as described above, it is possible to minimize such discomfort.

(Variation 1)

In the above embodiment, the external atmospheric pressure of the MEMS mirror 121A is measured directly using the atmospheric pressure sensor 122. Here, variation 1 will be discussed in which the external atmospheric pressure of the MEMS mirror 121A is indirectly measured by measuring the temperature inside an airtight container in which the MEMS mirror 121A is stored.

When laser light is projected on the MEMS mirror, the temperature of the MEMS mirror increases from the power of the laser. This increase in temperature is preferably controlled in order to provide accurate movement of the MEMS mirror, but when the MEMS mirror is directly cooled with a cooling element, for example, condensation forms on the MEMS mirror. To avoid fluctuation in the swinging operation of the MEMS mirror arising from this condensation or dust, it is preferable that the MEMS mirror be stored in an airtight container and the airtight container be filled with nitrogen or dry air.

In the projector according to variation 1, the MEMS mirror 121 in the laser light scanning unit 12 shown in FIG. 2 is stored in an airtight container, and the airtight container is filled with nitrogen or dry air. Furthermore, a temperature sensor is installed in the airtight container as a substitute for the atmospheric pressure sensor 122.

With this configuration of variation 1 in which the MEMS mirror is stored in an airtight container and the airtight container is filled with nitrogen or dry air, it is possible to indirectly calculate the external atmospheric pressure of the MEMS mirror 121A by measuring the temperature inside the airtight container. The external atmospheric pressure of the MEMS mirror 121A is calculated from the measured temperature using an equation of state of an ideal gas shown below.

$$pV = nRT \quad \text{(Equation 5)}$$

Here, p is the external atmospheric pressure of the MEMS mirror 121A to be calculated, V is the volume of the airtight container, n is the amount of substance (moles) of the gas filling the airtight container, R is a gas constant, and T is the measured temperature inside the airtight container. V, n, and R are constants, so the measured temperature T and the external atmospheric pressure p have a proportional relationship, and the external atmospheric pressure p is uniquely calculated from the measured temperature T.

For example, in place of the above Equations 1 though 4, the following Equations 6 through 8 are stored in the memory of the CPU 101 in a LUT.

$$\text{temperature} = \text{-40 °C} : y = 0.224x^2 + 4.185x + 68.3 \quad \text{(Equation 6)}$$

$$\text{temperature} = \text{25 °C} : y = 0.254x^2 + 4.201x + 69.1 \quad \text{(Equation 7)}$$

$$\text{temperature} = \text{95 °C} : y = 0.268x^2 + 4.400x + 71.2 \quad \text{(Equation 8)}$$

It should be noted that Equations 6 through 8 are based on the airtight container being filled with a gas that causes the atmospheric pressure of the airtight container to be 0.40 atm at 25 °C (room temperature) and the ranges of temperatures seen in automobiles (-40 °C to 95 °C), and are not limited to the above temperatures.

In other words, in variation 1, the MEMS mirror 121A is installed in an airtight container, and based on the temperature inside the airtight container measured as the atmospheric pressure, the scan control unit 134 sets the scan driving voltage higher for higher values of the measured temperature in order to control fluctuations in the scan angle of the laser light. With this, it is possible to control variations in the drawing region of the projected image from the external atmospheric pressure and keep the visual appearance of the projected image as seen by the user constant. This therefore makes it possible to increase the quality of the projected image. Moreover, compared to the atmospheric pressure sensor, it is possible to use a frequently used sensor such as a thermistor for the temperature sensor, thereby simplifying the configuration of the laser light scanning unit 12.

(Variation 2)

In the above embodiment and variation 1, the setting of the scan driving voltage is adjusted according to the atmospheric pressure information (measured atmospheric pressure or measured temperature) obtained by the scan control unit 134. In contrast, here variation 2 will be discussed in which an atmospheric pressure range conceivable for the laser light scanning unit 12 is divided into a plurality of atmospheric pressure zones, and the scan driving voltage is set per atmospheric pressure zone.

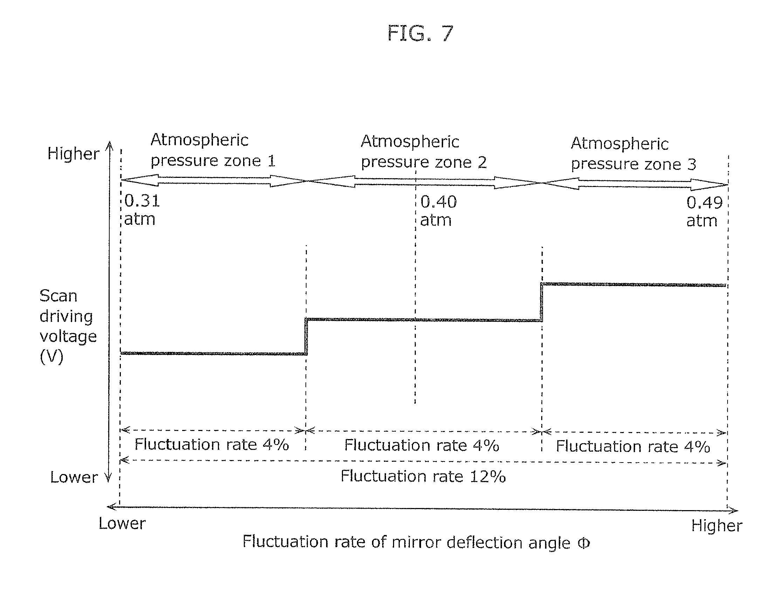

FIG. 7 is a graph illustrating the setting of the scan driving voltage according to variation 2 of the embodiment. In FIG. 7, the external atmospheric pressure range conceivable for the laser light scanning unit 12 is represented on the horizontal axis and the scan driving voltage is represented on the vertical axis. In variation 2, the deflection angle Φ of the mirror to be maintained by adjusting the scan driving voltage is set to 12°, and the atmospheric pressure range conceivable for the laser light scanning unit 12 is 0.31 atm to 0.49 atm. Since the mirror deflection angle Φ fluctuates 12% due to the fluctuations in atmospheric pressure (between 0.31 atm and 0.49 atm), the 12% fluctuation rate of the mirror deflection angle Φ is divided every 4%. The atmospheric pressure range that corresponds to the 4% fluctuation rate of the mirror deflection angle Φ is defined as an atmospheric pressure zone. In other words, the atmospheric pressure range (0.31 atm to 0.49 atm) is divided into three atmospheric pressure zones (atmospheric pressure zone 1: 0.31 to 0.37 atm, atmospheric pressure zone 2: 0.37 to 0.43 atm, atmospheric pressure 3: 0.43 to 0.49 atm). The scan control unit 134 determines which of the three atmospheric pressure zones the obtained atmospheric pressure belongs to, and sets the scan driving voltage in accordance with the graph illustrated in FIG. 7. In other words, the scan control unit 134 divides a predetermined atmospheric pressure range into a plurality of atmospheric pressure zones, and sets the scan driving voltage to be identical for atmospheric pressures belonging to the same atmospheric pressure zone. This makes it possible to reduce the amount of fitting data, such as the LUT, stored in memory, and simplify the configuration of the display control unit 13 and the CPU 101.

It should be noted that it is possible to reduce the changes in scan driving voltage by increasing the number of times the predetermined atmospheric pressure range is divided, thereby reducing a feeling of discomfort by the user.

Hereinbefore the projector and the HUD device according to the embodiment and variations of the present invention has been described, but the present invention is not limited to the embodiment and variations.

For example, in the projector according to variation 1 and variation 2, the scan control unit 134 may divide, into a plurality of voltage steps, a fluctuation amount of the scan driving voltage set based on the atmospheric pressure data from the atmospheric pressure sensor 122, and incrementally change the scan driving voltage using the plurality of voltage steps, similar to the embodiment. Moreover, the scan control unit 134 may change the scan driving voltage over a period spanning one or more frames of the projected image relative to fluctuations in the atmospheric pressure of the laser light scanning unit 12. With this, discomfort felt by the user can be minimized by changing the scan driving voltage incrementally or over a period spanning one or more frames.

Moreover, in the embodiment, the projector 10 is exemplified as being installed in an automobile HUD device, but the projector 10 is not limited to this example. For example, the projector 10 may be installed in an airplane HUD device.

Moreover, in the embodiment, the projector 10 is exemplified as being installed in a HUD device, but the projector 10 is not limited to this example. For example, the projector 10 may be used as a projector for projecting images on a screen installed on a wall.

Moreover, in the embodiment and the variations thereof, a laser light source is used as a light source, but this example is not limited thereto. For example, a light emitting diode (LED) light source may be used as the light source.

Moreover, the above described projector may more specifically be a computer system configured from a microprocessor, a ROM, a RAM, a hard disk drive, a display unit, and a keyboard, for example. A computer program is stored in the RAM or the hard disk drive. The projector and HUD device according to the present invention achieve their functions as a result of the microprocessor configuring the display control unit 13 operating according to a computer program stored in the CPU 101. Here, the computer program is configured of a plurality of pieced together instruction codes indicating a command to the computer in order to achieve a given function.

A portion or all of the components of the CPU 101 and the display control unit 13 may be configured from one system large scale integration (LSI). A system LSI is a super-multifunction LSI manufactured with a plurality of components integrated on a single chip, and specifically is a computer system configured of a microprocessor, ROM, and RAM, for example. The computer program is stored in the RAM. The system LSI achieves its function as a result of the microprocessor operating according to the computer program.

A portion or all of the components of the CPU 101 and the display control unit 13 may each be configured from an IC card that is detachably attached to each device or a stand-alone module. The IC card and the module are computer systems configured from a microprocessor, ROM, and RAM, for example. The IC card and the module may include the super-multifunction LSI described above. The IC card and the module achieve their function as a result of the microprocessor operating according to the computer program. The IC card and the module may be tamperproof.

An aspect of the present invention may also be a method of controlling the projector. In other words, a method of controlling the projector 10 including the laser light scanning unit 12 that scans laser light including image information at a predetermined scan angle to project an image on the transparent display plate 20, the method including: measuring an atmospheric pressure of an area in which the laser light scanning unit 12 is disposed; setting a scan driving voltage according to the measured atmospheric pressure to control fluctuations in the scan angle, the scan driving voltage determining the scan angle; and outputting the set scan driving voltage to the laser light scanning unit 12.

Moreover, the present invention may also be a computer program realizing this method of controlling the projector with a computer, or a digital signal of the computer program.

Moreover, the present invention may also be realized as the computer program or the digital signal stored on a non-transitory computer-readable storage recording medium, such as a flexible disk, hard disk, CD-ROM, MO, DVD, DVD-ROM, DVD-RAM, Blu-ray™ Disc (BD), or a semiconductor memory. The present invention may also be the digital signal stored on the above mentioned non-transitory storage recording medium.

Moreover, the present invention may also be realized by transmitting the computer program or the digital signal, for example, via an electric communication line, a wireless or wired line, a network such as the Internet, or data broadcasting.

Moreover, the present invention may be a computer system including memory storing the computer program and a microprocessor operating according to the computer program.

Moreover, the computer program or the digital signal may be implemented by an independent computer system by being stored on the non-transitory storage recording medium and transmitted, or sent via the network, for example.

Furthermore, the preceding embodiments and the preceding variation examples may be individually combined.

Although the present invention has been described and illustrated in detail, it is clearly understood that the same is by way of example only and is not to be taken by way of limitation, the scope of the present invention being limited only by the terms of the appended claims.

**Industrial Applicability**

The present invention is applicable as a projector which projects images or an automobile head-up display, for example.

**Reference Signs List**

| 1 | HUD device |
| 10 | projector |
| 11 | laser light generating unit |
| 12 | laser light scanning unit |
| 13 | display control unit |
| 20 | transparent display plate |
| 50 | automobile |
| 60 | display region |
| 61, 62 | information |
| 101 | CPU |
| 102 | input unit |
| 111, 112, 113 | laser light source |
| 114, 115 | beam splitter |
| 116 | lens |
| 121, 121A, 121B | MEMS mirror |
| 122 | atmospheric pressure sensor |
| 131 | image processing unit |
| 132 | light source control unit |
| 133 | light source driving unit |
| 134 | scan control unit |
| 135 | scan driving unit |

**Claims**

1. A projector comprising:

   a laser light generating unit configured to emit laser light including image information;
   a laser light scanning unit configured to scan the laser light emitted by the laser light generating unit at a predetermined scan angle to project an image on a projection screen; and
a control unit configured to set a scan driving voltage according to an atmospheric pressure of an area in which the laser light scanning unit is disposed and supply the scan driving voltage to the laser light scanning unit to control fluctuations in the scan angle, the scan driving voltage determining the scan angle.

2. The projector according to Claim 1,
wherein the laser light scanning unit includes a first mirror that reflects the laser light and swings to a predetermined deflection angle about an axis passing through a surface that reflects the laser light to scan the laser light at the predetermined scan angle.

3. The projector according to Claim 2,
wherein the deflection angle of the first mirror increases with the scan driving voltage and decreases with an increase in the atmospheric pressure, and
based on measured atmospheric pressure information for the laser light scanning unit, the control unit is configured to set the scan driving voltage higher for higher values of the atmospheric pressure to control fluctuations in the scan angle.

4. The projector according to Claim 3,
wherein the first mirror is disposed in an airtight container, and
based on a temperature in the airtight container measured as the atmospheric pressure information, the control unit is configured to set the scan driving voltage higher for higher values of the temperature to control fluctuations in the scan angle.

5. The projector according to any one of Claims 2 to 4,
wherein the first mirror horizontally scans the laser light at a resonance frequency of the first mirror,
the laser light scanning unit further includes a second mirror that vertically scans the laser light at a frequency lower than the resonance frequency of the first mirror, and
the control unit is configured to set the scan driving voltage according to the atmospheric pressure, the scan driving voltage determining the deflection angle of the first mirror.

6. The projector according to any one of Claims 1 to 5,
wherein the control unit is configured to divide, into a plurality of voltage steps, a fluctuation amount of the scan driving voltage set relative to fluctuations in the atmospheric pressure, and incrementally change the scan driving voltage using the plurality of voltage steps.

7. The projector according to any one of Claims 1 to 5,
wherein the control unit is configured to change the scan driving voltage over a period spanning one or more frames relative to fluctuations in the atmospheric pressure.

8. The projector according to any one of Claims 1 to 7,
wherein the control unit is configured to divide a predetermined atmospheric pressure range into a plurality of atmospheric pressure zones, and set the scan driving voltage to be identical for atmospheric pressures belonging to a same one of the atmospheric pressure zones.

9. A head-up display device comprising:

the projector according to any one of Claims 1 to 8; and
a transparent display plate onto which the image is projected.

10. A method of controlling a projector including a laser light scanning unit that scans laser light including image information at a predetermined scan angle to project an image on a projection screen, the method comprising:

measuring an atmospheric pressure of an area in which the laser light scanning unit is disposed;
setting a scan driving voltage according to the measured atmospheric pressure to control fluctuations in the scan angle, the scan driving voltage determining the scan angle; and
outputting the set scan driving voltage to the laser light scanning unit.

FIG. 1A

User's line of sight

FIG. 1B

Osaka   Kobe

1.0 km

FIG. 2

FIG. 3

FIG. 4

Incident ray I

Reflected ray R1

θ θ

MEMS mirror

121

Deflection angle 0°

Reflected ray R1

Reflected ray R2

2Φ

θ+Φ θ+Φ

Φ θ θ

Φ

Incident ray I

θ

MEMS mirror

Φ

121

Deflection angle + Φ°

FIG. 5

20

Scan angle
±2Φ

−2Φ  +2Φ

121A

Mirror deflection angle
±Φ

−Φ  +Φ

FIG. 6

# FIG. 7

EP 2 784 568 A1

Europäisches
Patentamt

European
Patent Office

Office européen
des brevets

# EUROPEAN SEARCH REPORT

Application Number

EP 14 16 1307

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2007/229204 A1 (OGIKUBO SHINYA [JP] ET AL) 4 October 2007 (2007-10-04)<br>* paragraphs [0002], [0007], [0151], [0182], [0255], [0257], [0261] *<br>* figure 28 * | 1-10 | INV.<br>G02B26/08<br>G02B27/01<br>G02B27/18<br>G01L9/00 |
| Y | CHU HOANG MANH ET AL: "Vacuum operation of comb-drive micro display mirrors", JOURNAL OF MICROMECHANICS & MICROENGINEERING, INSTITUTE OF PHYSICS PUBLISHING, BRISTOL, GB, vol. 19, no. 10, 1 October 2009 (2009-10-01), page 105018, XP020164943, ISSN: 0960-1317, DOI: 10.1088/0960-1317/19/10/105018 * the whole document * | 1-10 | |
| Y | JP 2006 320963 A (SUMITOMO PRECISION PROD CO) 30 November 2006 (2006-11-30) * paragraph [0014] * | 1-10 | |

TECHNICAL FIELDS
SEARCHED      (IPC)

G02B
G01L

The present search report has been drawn up for all claims

| Place of search | Date of completion of the search | Examiner |
|---|---|---|
| Munich | 25 June 2014 | Denise, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                   EP 14 16 1307

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2014

| Patent document cited in search report | Publication date | Patent family member(s) | Publication date |
|---|---|---|---|
| US 2007229204 A1 | 04-10-2007 | CN 101051115 A<br>JP 4792322 B2<br>JP 2007279233 A<br>US 2007229204 A1 | 10-10-2007<br>12-10-2011<br>25-10-2007<br>04-10-2007 |
| JP 2006320963 A | 30-11-2006 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013041289 A